# EUROPÄISCHE PATENTSCHRIFT

(11) **EP 4 086 118 B1**
(45) Veröffentlichungstag und Bekanntmachung des Hinweises auf die Patenterteilung: **27.12.2023**
(21) Anmeldenummer: 22170462.0
(22) Anmeldetag: 28.04.2022
(51) Int. Cl.: B60R 9/06, B60R 9/10, B60D 1/24, B60D 1/06, B60D 1/44

(54) **VORRICHTUNG ZUM AUFNEHMEN EINES FAHRRADTRÄGERS**
DEVICE FOR HOLDING A BICYCLE HOLDER
DISPOSITIF DE RÉCEPTION D'UN PORTE-BICYCLETTE

(30) Priorität: 29.04.2021 AT 503332021
(43) Veröffentlichungstag der Anmeldung: 09.11.2022
(73) Patentinhaber: Wagner, Karl, 4190 Bad Leonfelden (AT)
(72) Erfinder: Wagner, Karl, 4190 Bad Leonfelden (AT)
(74) Vertreter: Hübscher & Partner Patentanwälte GmbH

(56) Entgegenhaltungen:
- EP-A1- 3 725 593
- DE-A1-102017 001 152
- US-B1- 7 631 791

## Beschreibung

Erfindung bezieht sich auf eine Vorrichtung zum Aufnehmen eines Fahrradträgers mit einer auf der Heckseite eines Fahrzeugs vorgesehenen, parallel zur Hinterradachse verlaufenden Führung und mit einem auf der Führung verschiebbaren Schlitten, der einen Drehteller mit einer Aufnahme für den um die Achse des Drehtellers zwischen einer heckseitigen Transportstellung und einer seitlich neben das Fahrzeug ausgeschwenkten Offenstellung verschwenkbaren Fahrradträger umfasst.

Um trotz einer heckseitigen Anordnung eines Fahrradträgers einen von den aufgenommenen Fahrrädern unbehinderten Zugang zur Heckseite des Fahrzeugs zu ermöglichen, ist es bekannt (EP 1 211 134 A1, EP 3 771 597 A2), an einer Anhängekupplung des Fahrzeugs eine zur Fahrzeughinterachse parallele Führung für einen entlang dieser Führung verschiebbaren Schlitten mit einer Aufnahme für den Fahrradträger vorzusehen, der um eine auf dem Schlitten vorgesehene Schwenkachse zwischen einer heckseitigen Transportstellung und einer seitlich neben das Fahrzeug ausgeschwenkten Offenstellung verschwenkbar ist. Zufolge dieser schwenkbaren Lagerung des Fahrradträgers gegenüber dem Schlitten können der Fahrradträger und damit die von diesem Fahrradträger aufgenommenen Fahrräder zunächst mithilfe des Schlittens aus der die Transportstellung vorgebenden Heckmitte entlang der Führung zu einem einer Fahrzeugseite zugekehrten Ende der Führung verlagert werden, um dann durch ein Verschwenken auf die Fahrzeugseite ausgeschwenkt zu werden. Der Schlitten kann zu diesem Zweck einen um die Schwenkachse schwenkbaren Arm zum Aufnahmen des Fahrradträgers (EP 1 211 134 A1) oder einen Drehteller aufweisen, der einen koaxialen Kugelkopf zur Aufnahme des Fahrradträgers bildet (EP 3 771 597 A2). Nachteilig ist in beiden Fällen, dass einerseits der Schlitten in der heckmittigen Transportstellung gegenüber der Führung und anderseits der Fahrradträger gegenüber dem Schlitten beispielsweise mithilfe von Steckbolzen gesichert werden müssen, was nicht nur die Handhabung erschwert, sondern auch bei einer nicht ordnungsgemäßen Sicherung die Gefahr mit sich bringt, dass der Fahrradträger nicht nur in einer endseitigen Schlittenstellung ausschwenkt.

Der Erfindung liegt somit die Aufgabe zugrunde, eine Vorrichtung zum Aufnehmen eines Fahrradträgers, der auf eine Fahrzeugseite in eine Offenstellung ausgeschwenkt werden kann, so auszubilden, dass eine einfache Handhabung gewährleistet und ein Ausschwenken des Fahrradträgers ausschließlich in der hierfür durch die Schlittenstellung vorgegebenen Offenstellung möglich wird.

Ausgehend von einer Vorrichtung der eingangs geschilderten Art löst die Erfindung die gestellte Aufgabe dadurch, dass der mit einem die Aufnahme für den Radträger bildenden, auskragenden Arm versehene Drehteller auf einer im Schlitten drehbar gelagerten, ein Zahnradsegment tragenden Welle sitzt, das mit einer Zahnstange an einem einer Fahrzeugseite zugekehrten Ende der Führung zusammenwirkt, und dass der Drehteller einen Drehanschlag aufweist, der an einer entlang der Führung verlaufenden, den Drehanschlag im Eingriffsbereich des Zahnradsegments in die Zahnstange freigebenden Gleitfläche abgestützt ist.

Die auf einer Fahrzeugseite im Endbereich des Stellwegs des Schlittens vorgesehene, der Führung zugeordnete Zahnstange bedingt eine Drehung des Drehtellers, sobald aufgrund der Schlittenbewegung das durch eine Welle mit dem Drehteller verbundene Zahnradsegment in die Zahnstange eingreift und auf dieser abrollt. Da die Aufnahme für den Fahrradträger auf einem auskragenden Arm des Drehteller vorgesehen ist, wird der Fahrradträger mit einem ausreichenden Schwenkradius verschwenkt, um unter Freigabe der Heckseite unbehindert auf die Fahrzeugseite ausgeschwenkt werden zu können. Das Einschwenken des Fahrradträgers für die Transportstellung erfolgt mit der gegensinnigen Verlagerung des Schlittens, weil ja das Zahnradsegment des Drehtellers im Eingriff mit der Zahnstange steht und von der Zahnstange erst abrollt, wenn der Fahrradträger in die Transportstellung zurückgedreht ist. Diese Transportdrehstellung wird durch einen am Drehteller vorgesehenen Drehanschlag gesichert, der sich an einer entlang der Führung erstreckenden Gleitfläche abstützt. Diese Gleitfläche darf sich jedoch nicht über den gesamten Stellweg des Schlittens erstrecken, sondern muss den Drehanschlag im Eingriffsbereich des Zahnradsegments in die Zahnstange freigeben, was einer Abstimmung der Länge der Gleitfläche und des Stellwegs des Schlittens bis zum Eingriff des Zahnradsegments in die Zahnstange bedarf.

Obwohl eine Schlittenverlagerung von Hand aus durchaus möglich ist, ergeben sich besondere Handhabungsvorteile, wenn für einen entsprechenden Schlittenantrieb gesorgt wird. Hierfür bietet sich insbesondere ein Zahnriementrieb an, sodass der Schlitten mittels des Zahnriementriebs schlupffrei angetrieben und festgehalten werden kann. Der Schlitten kann zusätzlich in der heckmittigen Transportstellung durch ein selbständig einfallendes, elektrisches Schloss verriegelt werden, dessen Verriegelungsstellung im Fahrzeug angezeigt werden kann. Mit dem Öffnen dieses Schlosses kann der Zahnriementrieb für die Schlittenverlagerung angesteuert werden, der mittels eines Endschalters abgestellt wird, wenn der Schlitten seine Endposition für die Offenlage erreicht hat.

In der Zeichnung ist der Erfindungsgegenstand beispielsweise dargestellt. Es zeigen
- Fig. 1: eine erfindungsgemäße Vorrichtung zum Aufnehmen eines Fahrradträgers mit einem in der Transportstellung festgehaltenen Schlitten in einer schematischen Untersicht,

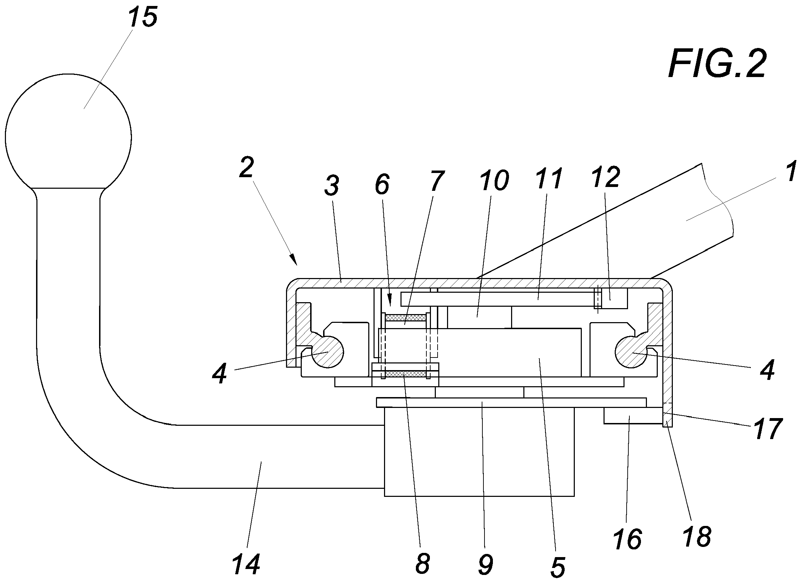

- Fig. 2: diese Vorrichtung in einem Schnitt nach der Linie II-II der Fig.1 in einem größeren Maßstab und
- Fig. 3: den Schlitten in der Stellung für den ausgeschwenkten Fahrradträger in einer Untersicht in einem größeren Maßstab.

Eine erfindungsgemäße Vorrichtung weist eine beispielsweise über Laschen 1 an das Heck eines Fahrzeugs anschließbare Führung 2 auf, die gemäß dem dargestellten Ausführungsbeispiel einen Träger 3 in Form eines nach unten offenen U-Profils mit entlang der Schenkel verlaufenden Führungsprofilen 4 umfasst, auf denen ein Schlitten 5 verschiebbar geführt ist. Zum Antrieb des Schlittens 5 ist ein Zahnriementrieb 6 vorgesehen, dessen um gezahnte Riemenscheiben 7 geführter Zahnriemen 8 am Schlitten 5 festgeklemmt ist. Zum Antrieb des Riementriebs 6 dient ein aus Übersichtlichkeitsgründen nicht dargestellter, mit einer Riemenscheibe 7 antriebsverbundener Motor.

Auf dem Schlitten 5 ist ein Drehteller 9 angeordnet, dessen im Schlitten 5 drehbar gelagerte Welle 10 ein Zahnradsegment 11 trägt, das mit einer der Führung 2 zugehörigen Zahnstange 12 zusammenwirkt. Die Zahnstange 12 ist an einem einer Fahrzeugseite zugekehrten Ende 13 der Führung 2 vorgesehen. Wird der Schlitten 5 gegen das Ende 13 der Führung 2 verlagert und läuft das Zahnradsegment 11 auf die Zahnstange 12 auf, so rollt das mit der Zahnstange 12 kämmende Zahnradsegment 11 bei fortgesetzter Schlittenbewegung auf der Zahnstange 12 mit der Wirkung ab, dass der Drehteller 9 gedreht wird.

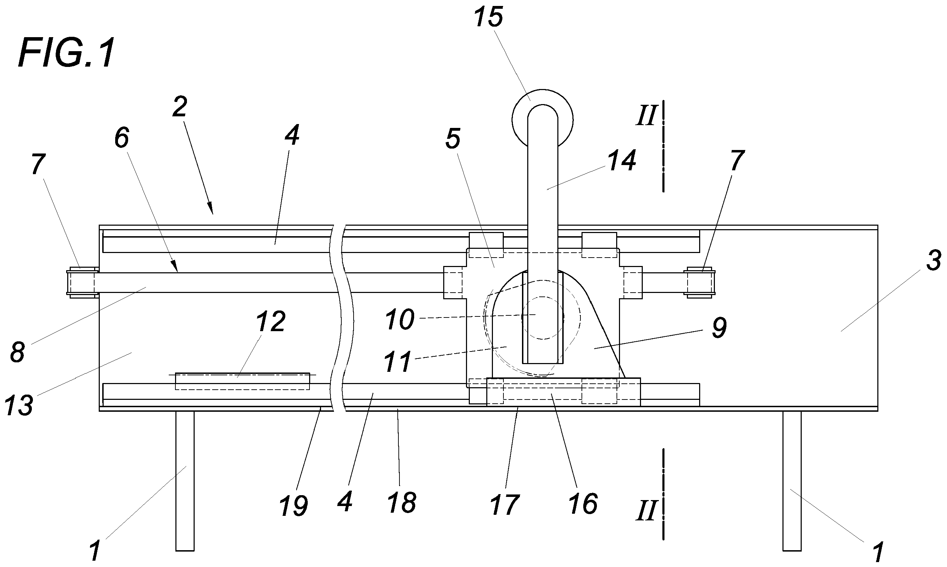

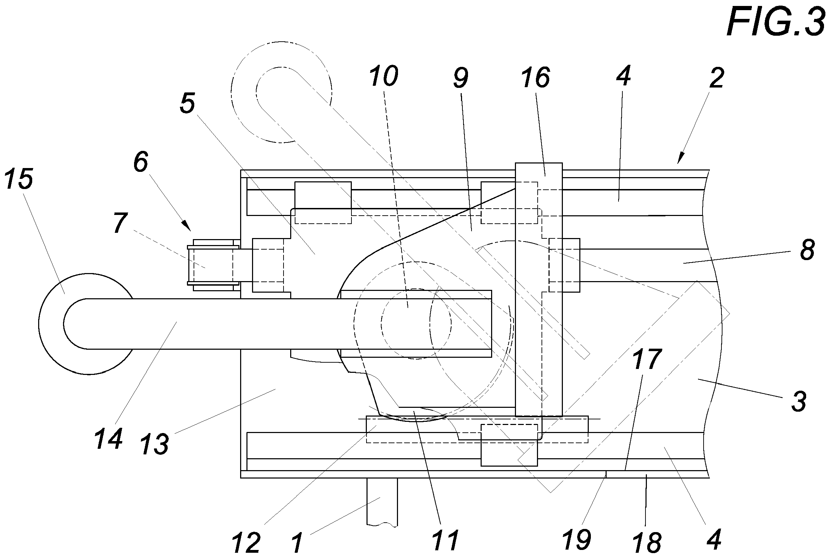

Der Drehteller 9 trägt einen auskragenden, gekröpften Arm 14, der eine z. B. in Form eines Kugelkopfes ausgebildete Aufnahme 15 für einen üblichen Fahrradträger bildet. In der Transportstellung des Fahrradträgers, die gemäß der Fig. 1 durch eine Schlittenstellung in der Heckmitte des Fahrzeugs bestimmt wird, verläuft der Arm 14 senkrecht zur Führung 2, um im Bereich des Endes 13 der Führung 2 um 90° in eine zur Führung 2 parallele Offenstellung nach der Fig. 3 verschwenkt zu werden, wenn das Zahnradsegment 11 auf der Zahnstange 12 abrollt. Dies bedeutet, dass der drehfest mit der Aufnahme 15 gekuppelte Fahrradträger von der Heckseite des Fahrzeugs auf die Fahrzeugseite ausgeschwenkt wird und den Zugang zur Fahrzeugheckseite freigibt.

Da der Drehteller 9 nur im Bereich des Endes 13 der Führung 2 gedreht werden darf, ist er mit einem Drehanschlag 16 versehen, der sich an einer in Richtung der Führung 2 erstreckenden Gleitfläche 17 abstützt. Diese Gleitfläche 17 wird vorteilhaft durch einen hochgezogenen Randabschnitt 18 des der Zahnstange 12 benachbarten Schenkels des Trägers 3 gebildet. Der hochgezogene Randabschnitt 18 des Trägerschenkels darf sich jedoch nicht bis in den Bereich der Zahnstange 12 erstrecken, weil im Eingriffsbereich des Zahnradsegments 11 in die Zahnstange 12 der Drehanschlag 16 freigestellt sein muss, um eine Drehung des Drehtellers 9 nicht zu behindern, wie dies insbesondere der Fig. 3 entnommen werden kann. Der die Gleitfläche 17 bildende, hochgezogene Randabschnitt 18 endet somit vor der Zahnstange 12. Das Ende des hochgezogenen Randabschnitts 18 ist mit 19 bezeichnet.

Die seitliche Verlagerung des auf der Aufnahme 15 des Drehtellers 9 aufgesetzten Fahrradträgers aus der heckmittigen Transportstellung und das anschließende Ausschwenken auf die Fahrzeugseite in eine gegenüber der Transportstellung zumindest angenähert um 90° versetzte Offenstellung wird durch den Antrieb des Zahnriementriebs 6 gesteuert, was einfache Antriebsverhältnisse schafft, zumal sowohl die Transportstellung als auch die Offenstellung durch Endschalter für den Zahnriementrieb 6 festgelegt werden können.

## Patentansprüche

1. Vorrichtung zum Aufnehmen eines Fahrradträgers mit einer auf der Heckseite eines Fahrzeugs vorgesehenen, parallel zur Hinterradachse verlaufenden Führung (2) und mit einem auf der Führung (2) verschiebbaren Schlitten (5), der einen Drehteller (9) mit einer Aufnahme (15) für den um die Achse des Drehtellers (9) zwischen einer heckseitigen Transportstellung und einer seitlich neben das Fahrzeug ausgeschwenkten Offenstellung verschwenkbaren Fahrradträger umfasst, **dadurch gekennzeichnet, dass** der mit einem die Aufnahme (15) für den Radträger bildenden, auskragenden Arm (14) versehene Drehteller (9) auf einer im Schlitten (5) drehbar gelagerten, ein Zahnradsegment (11) tragenden Welle (10) sitzt, das mit einer Zahnstange (12) an einem einer Fahrzeugseite zugekehrten Ende (13) der Führung (2) zusammenwirkt, und dass der Drehteller (9) einen Drehanschlag (16) aufweist, der an einer entlang der Führung (2) verlaufenden, den Drehanschlag (16) im Eingriffsbereich des Zahnradsegments (11) in die Zahnstange (12) freigebenden Gleitfläche (17) abgestützt ist.

2. Vorrichtung nach Anspruch 1, **dadurch gekennzeichnet, dass** der Schlitten (5) mithilfe eines Zahnriementriebs (6) entlang der Führung (2) verfahrbar ist.

## Claims

1. Device for receiving a bicycle carrier with a guide (2) provided on the rear side of a vehicle and extending parallel to the rear wheel axle and with a slide (5) which is displaceable on the guide (2) and comprises a rotary plate (9) with a receptacle (15) for the bicycle carrier, which bicycle carrier can be pivoted about the axis of the rotary plate (9) between a transport position at the rear and an open position pivoted out laterally next to the vehicle, **characterized in that** the rotary plate (9) provided with a projecting arm (14) forming the receptacle (15) for the bicycle carrier is seated on a shaft (10) which is rotatably mounted in the slide (5) and carries a gearwheel segment (11), which gearwheel segment (11) works together with a gear rack (12) at an end (13) of the guide (2), which end (13) is facing one side of the vehicle, and **in that** the rotary plate (9) has a rotary stop (16) which is supported on a sliding surface (17) extending along the guide (2) and releasing the rotary stop (16) in the engagement region of the gearwheel segment (11) into the gear rack (12).

2. Device according to claim 1, **characterized in that** the slide (5) can be moved along the guide (2) with the aid of a toothed belt drive (6).

## Revendications

1. Dispositif pour recevoir un porte-vélo doté d'un élément de guidage (2) prévu à l'arrière d'un véhicule et courant parallèlement à l'axe de l'essieu arrière et d'une glissière (5) pouvant coulisser sur l'élément de guidage (2) qui comprend un plateau rotatif (9) avec un réceptacle (15) pour le porte-vélo pouvant pivoter autour de l'axe du plateau rotatif (9) entre une position de transport à l'arrière et une position ouverte déployée latéralement à côté du véhicule, **caractérisé en ce que** le plateau rotatif (9) muni d'un bras (14) en porte-à-faux formant le réceptacle (15) pour le porte-vélo repose sur un arbre (10) monté de manière pivotante dans la glissière (5) et portant un segment de roue dentée (11) qui interagit avec une crémaillère (12) à une extrémité (13) de l'élément de guidage (2) opposée à un côté du véhicule, et que le plateau rotatif (9) comporte une butée de rotation (16) qui s'appuie sur une surface de glissement (17) courant le long de l'élément de guidage (2) et libérant la butée de rotation (16) dans la zone d'engagement du segment de roue dentée (11) dans la crémaillère (12).

2. Dispositif selon la revendication 1, **caractérisé en ce que** la glissière (5) peut être déplacée le long de l'élément de guidage (2) à l'aide d'une transmission à courroie dentée (6).
